# EUROPÄISCHE PATENTSCHRIFT

(11) **EP 0 484 655 B1**
(45) Veröffentlichungstag und Bekanntmachung des Hinweises auf die Patenterteilung: **29.06.1994**
(21) Anmeldenummer: 91115171.0
(22) Anmeldetag: 09.09.1991
(51) Int. Cl.: C09D 7/00

(54) **Verfahren zum Behandeln von Kreislaufwasser in Spritzlackieranlagen**
Method for treating circuit water in paint spray booths
Procédé de traitement de l'eau de recyclage dans les cabines de pulvérisation

(30) Priorität: 17.11.1990 DE 4036716; 03.11.1990 DE 4035027
(43) Veröffentlichungstag der Anmeldung: 13.05.1992
(73) Patentinhaber: BASF Lacke + Farben AG, 48165 Münster-Hiltrup (DE)
(72) Erfinder: Lauke, Arno, W-4400 Münster (DE)
(74) Vertreter: Münch, Volker, Dr.

(56) Entgegenhaltungen:
- DE-A- 2 322 792
- FR-A- 2 310 161

## Beschreibung

Die Erfindung bezieht sich auf ein Verfahren zum Behandeln von Kreislaufwasser in Spritzlackieranlagen, wobei ein Teil des Wassers behandelt wird, während ein anderer Teil den Kreislauf aufrechterhält.

Derartige Verfahren werden z. B. in der Großserien-Naßlackierung, wie z. B. der Automobilindustrie, angewandt. Dort werden die Spritznebel, der sogenannte Overspray, mit Wasser ausgewaschen, welches im Kreislauf geführt wird.

Um die Lackpartikel vom Wasser aufnehmen zu können und damit diese nicht an den wasserführenden Einrichtungen kleben, werden die Lackpartikel durch Zugabe von Chemikalien destabilisiert (entklebt). Es bilden sich Mikroflocken. Für die Anreicherung dieser Koagulate sind im Wasserkreislauf Absetzbecken vorgesehen. Hier wird mit Lackkoagulaten angereichertes Wasser abgezogen und in einem kontinuierlichen Verfahren im Nebenstrom behandelt. Diese Behandlung umfaßt beipielsweise eine Flockulation der Koagulate sowie eine Entwässerung und eine Wasserrückführung oder eine Wasserausschleusung.

Nachteilig bei diesem Stand der Technik ist die Schwierigkeit, den Prozeß in stabilem Zustand zu betreiben. So bestehen z. B. bekannte Schwierigkeiten darin, daß in den Klärseen durch ein übermäßiges Bakterienwachstum nicht nur die Koagulate verändert werden und dadurch für eine Wiederverwertung unbrauchbar werden, sondern die Klärseen entwickeln durch die Bakterien Geruchsbelästigungen. Weiterhin ist der Anteil des für den Kreislauf verwendbaren Wassers aus dem Nebenstrom sehr gering: Zum Teil werden bis zu 40 % des Nebenstroms als Abwasser ausgeschleust.

Schließlich bilden die Klärseen selbst Nachteile, da durch die große offene Oberfläche das im Klärsee vorhandene Wasser verschmutzt wird. Zudem bilden die Klärseen ein ständiges Gefahrenpotential hinsichtlich einer möglichen Bodenkontamination.

Der Erfindung liegt die Aufgabe zugrunde, ein Verfahren zum Behandeln von Kreislaufwasser zu schaffen, welches eine konstante Wasserqualität ermöglicht.

Diese der Erfindung zugrundeliegende Aufgabe wird dadurch gelöst, daß der eine Teil des Wassers stationär behandelt wird und nach der Behandlung gegen das unbehandelte Wasser ausgetauscht wird.

Mit anderen Worten schlägt die Erfindung vor, statt der kontinuierlichen Behandlung eines Teils der Wassermenge im Nebenstrom das zu behandelnde Wasser stationär, d. h. diskontinuierlich zu behandeln und erst nach erfolgter Behandlung gegen unbehandeltes Wasser auszutauschen. Auf diese Weise kann das Wasser so lange nach diversen Methoden behandelt werden, bis die gewünschte Wasserqualität erreicht ist. Der Wasseraustausch wird fällig, wenn im Kreislaufwasser eine bestimmte Koagulatkonzentration erreicht ist. Die Anreicherungsphase des Kreislaufwassers ist ausreichend für eine umfangreiche Behandlung der zweiten Wassermenge.

Darüber hinaus ermöglicht das erfindungsgemäße Verfahren, das Wasser während der Behandlung in einen Zustand zu bringen, in dem es für den Kreislauf nicht verwendbar wäre. So sind z. B. Verfahrensschritte möglich, die das Wasser kurzzeitig im extrem sauren Bereich halten. Ein derart saures Wasser kann nicht in den Hauptkreislauf zurückgeführt werden, da ansonsten starke Korrosionen an den Spritzeinrichtungen und auch den wasserführenden Elementen auftreten würden. Durch das erfindungsgemäße Verfahren einer stationären Behandlung jedoch kann dieses saure Wasser anschließend wieder so eingestellt werden, daß diese Wassermenge problemlos in den Kreislauf zurückgeführt werden kann.

Weitere vorteilhafte Ausgestaltungen des erfindungsgemäßen Verfahrens sind in den Unteransprüchen beschrieben.

Das erfindungsgemäße Verfahren wird beispielhaft anhand einer schematischen Zeichnung erläutert.

Dabei ist mit 1 eine Mehrzahl von Spritzkabinen bezeichnet, in denen Wasser verteilt und wieder gesammelt wird. Das von diesen Spritzkabinen gesammelte Wasser wird über eine Leitung 2 einem Sammelbehälter 3 zugeführt, in dem ein gewisser Mindestwasserstand aufrechterhalten wird. Das Wasser wird von dem Sammelbehälter 3 über eine Leitung 4 und eine Pumpe 5 wieder zu den Spritzkabinen geführt.

Die im Kreislauf gehaltene Wassermenge ist dabei relativ gering und reicht gerade für den sogenannten "hold up" aus, d. h. zur Sicherstellung der Wassermenge, die durch die verschiedenen Pumpen und Leitungen geführt wird sowie durch die Wäscher und Wasserrinnen in den Spritzkabinen. Im Sammelbehälter 3 steht daher während des Betriebs lediglich ein Sumpf mit einer gewissen Mindestwassermenge, um die Pumpe 5 zu versorgen. Wenn die Anlage abgeschaltet wird, z B. abends oder an Wochenenden, füllt sich der Sammelbehälter 3 und nimmt das gesamte Kreislaufwasser auf.

Wenn das Lackkoagulat im Kreislaufwasser zu einem gewissen Maß aufgepegelt ist, wird umgeschaltet von Kreislauf auf Behandlung. Dabei werden Ventile 6 und 7 geschlossen und Ventile 6a und 7a an einem weiteren Sammelbehälter 3a geöffnet. Auf diese Weise ist die Wassermenge des weiteren Sammelbehälters 3a über die Leitung 4 und die Pumpe 5 in den Kreislauf geschaltet.

Während der Zeit, in der der weitere Sammelbehälter 3a in den Kreislauf eingeschaltet ist, kann das Wasser aus dem Sammelbehälter 3 behandelt werden. Zu diesem Zweck wird das Wasser aus dem Sammelbehälter 3 zunächst unter Zudosierung von Fällmittel in den Sammelbehälter 3b gefördert, so daß sich die Koagulatflocken dort absetzen oder flotieren können. Das zu behandelnde Wasser nimmt hierbei einen Weg über ein Ablaßventil 8, eine Leitung 9, ein Ventil 10, eine Pumpe 11, eine Leitung 12 und ein weiteres Ventil 14b in den Sammelbehälter 3b, wobei vor der Pumpe 11 das Fällmittel bei 15 zugegeben wird.

Die abgesetzten oder aufgeschwommenen Koagulatflocken sowie das von Koagulat nahezu reine Wasser können nun aus dem Sammelbehälter 3b über ein Ablaßventil 8b abgelassen werden, wobei der Lackschlamm über die Leitung 9, ein Ventil 16 und eine Pumpe 17 einer Entwässerung bei 18 unterzogen werden kann, während das Wasser über die Leitung 9, das Ventil 16 und die Pumpe 17 einer Nachbehandlung bei 19 zugeführt werden kann. Während das entwässerte Koagulat in einen Behälter 20 gefördert wird, kann das nachbehandelte Wasser über die Leitung 12 in den Sammelbehälter 3 zurückgeführt werden.

Es ist günstig, den geflockten Inhalt des Sammelbehälters 3b über Nacht stehenzulassen, um den Koagulatflocken ausreichend Zeit zur Sedimentation bzw. Flotation zu geben. Der Abzug des Koagulats über das Ablaßventil 8b wird erleichtert durch ein Krälwerk 21, welches von einem Motor 22 angetrieben wird.

Das in einer ersten Stufe behandelte Wasser, welches dadurch von Koagulaten zum größten Teil befreit ist, muß nun vorbereitet werden auf den erneuten Einsatz als Kreislaufwasser für die Spritzkabinen. Dafür wird es vom Sammelbehälter 3 über das Ventil 10 und die Pumpe 11 in den leeren Sammelbehälter 3b gepumpt, wobei über die Leitung 15 wiederum Zugabemittel zudosiert werden können.

Vorteilhafterweise wird in den Behältern 3 bis 3b nicht nur ein Teil der Gesamtwassermenge behandelt, sondern es wird die komplette, durch die Spritzkabinen geführte Wassermenge einer Behandlung zugeführt, während eine komplette zweite Wassermenge als Spritzkabinenkreislaufwasser geschaltet wird. Dadurch, daß keine große Wassermenge mit großen Absinkbecken vorgesehen ist, erfolgt die Aufpegelung des Lackkoagulats bis zu einem behandlungswürdigen Maß in einer so kurzen Zeitspanne, daß das Koagulat nicht durch den Einfluß von Mikroorganismen verändert werden kann. Durch die Behandlung der gesamten Kreislaufwassermenge wird sichergestellt, daß alle Wasseranteile behandelt werden. Es kann daher keine Wasseranteile und damit Koagulatanteile geben, die - würden sie im Nebenstrom behandelt - erst nach sehr langer Zeit dieser Behandlung zugeführt werden.

Die relativ kleinen Behälter, die nur zur Aufnahme der "hold up" Wassermenge ausgelegt sein müssen, können säurefest und gegenüber aggressiven Stoffen beständig ausgebildet oder ausgekleidet sein. Dadurch, daß die Behandlung stationär, d. h. nicht mit einem Teil des Kreislaufwassers im Nebenstrom erfolgt, können auf diese Weise Behandlungsschritte vorgesehen werden, die das Wasser beispielsweise in einen PH-Bereich bringen, in dem es für den üblichen Kreislauf zu sauer wäre und zu Spritzkabinenkorrosion führen würde. Eine solche Behandlung wäre z. B. die katalythische Oxidation von Lösemitteln und Harzen, die im Wasser gelöst sind.

Die Wasserbehandlung kann im sauren pH-Bereich durchgeführt werden und das Wasser anschließend wieder auf seine gewünschte Qualität eingestellt werden, so daß bei einem erneuten Wasserwechsel das behandelte und nun opitimal eingestellte Wasser wiederum als Kreislaufwasser zur Verfügung gestellt werden kann.

Für die Behandlung des Wassers, welches zunächst als Kreislaufwasser benutzt wurde, stehen also die Behälter 3 und 3b zur Verfügung. Aus dem bisherigen Kreislaufwasser ist daher nun "Behandlungswasser" geworden. Für dessen Behandlung steht soviel Zeit zur Verfügung, bis das währenddessen verwendete Kreislaufwasser des weiteren Sammelbehälters 3a in seinem Lack-Koagulatgehalt soweit aufgepegelt ist, daß eine Behandlung erforderlich wird. Üblicherweise steht eine genügend lange Zeit zur Verfügung, um das "Behandlungswasser" zufriedenstellend behandeln und einstellen zu können.

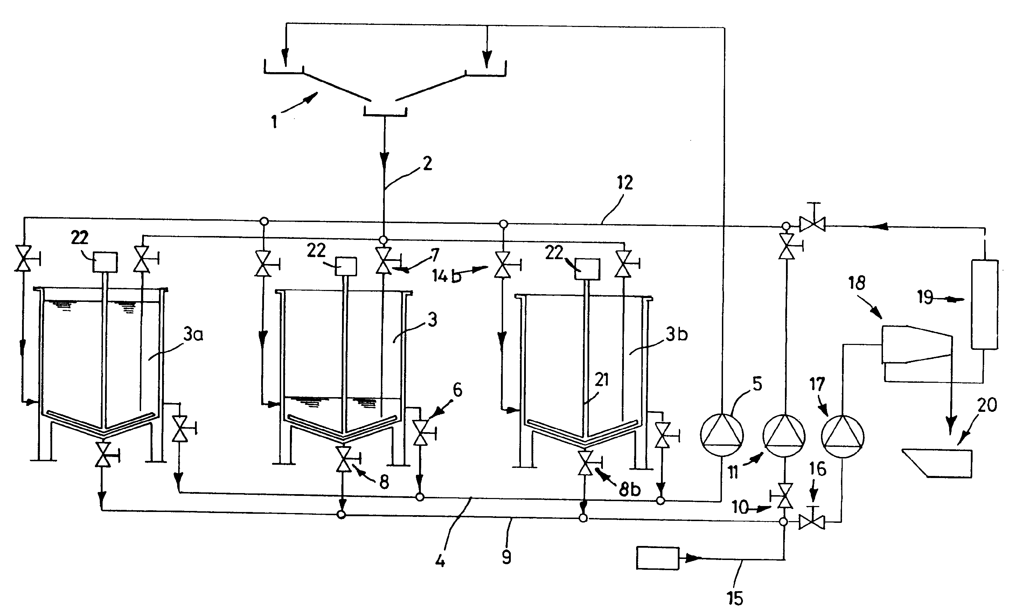

Im Gegensatz zu den in der Zeichnung dargestellten Behältern können auch geschlossene Behälter mit einem Deckel verwendet werden. Auf diese Weise kann die Gefahr von Verschmutzungen, die von oben in den Behälter eingebracht werden, verringert werden und weiterhin eine evtl. Geruchsbelästigung vermieden werden.

## Patentansprüche

1. Verfahren zum Behandeln von Kreislaufwasser in Spritzlackieranlagen, wobei ein Teil des Wassers behandelt wird, während ein anderer Teil den Kreislauf aufrechterhält, dadurch gekennzeichnet, daß der eine Teil des Wassers stationär behandelt wird und nach der Behandlung gegen das unbehandelte Wasser ausgetauscht wird.

2. Verfahren nach Anspruch 1, dadurch gekennzeichnet, daß als Kreislaufwasser eine Wassermenge verwendet wird, die zum Füllen der Rohrleitungen und der -einbauten in den Spritzkabinen gerade ausreicht.

3. Verfahren nach Anspruch 1 oder 2, dadurch gekennzeichnet, daß das zur Behandlung abgetrennte Wasser einer PH-Einstellung unterzogen wird.

4. Verfahren nach einem der Ansprüche 1 bis 3, dadurch gekennzeichnet, daß das zur Behandlung abgetrennte Wasser einer Ozonisierung unterzogen wird.

5. Verfahren nach einem der Ansprüche 1 bis 4, dadurch gekennzeichnet, daß das zur Behandlung abgetrennte Wasser einer katalytischen Oxydation unterzogen wird.

6. Verfahren nach einem der Ansprüche 1 bis 5, dadurch gekennzeichnet, daß die Behandlung des Wassers in geschlossenen Behältern erfolgt.

7. Verfahren nach einem der Ansprüche 1 bis 6, dadurch gekennzeichnet, daß die komplette Kreislauf-Wassermenge behandelt wird und für die Aufrechterhaltung des Kreislaufs eine komplette zweite Wassermenge verwendet wird.

## Claims

1. Method of treating circuit water in spray-painting units, where some of the water is treated while some maintains the circuit, characterized in that one part of the water is treated in a stationary manner and, after the treatment, is exchanged for the untreated water.

2. Method according to claim 1, characterized in that the quantity of water used as circuit water is just sufficient to fill the pipelines and the internal pipe fittings in the spraybooths.

3. Method according to claim 1 or 2, characterized in that the water separated off for treatment is subjected to a PH [sic] adjustment.

4. Method according to one of claims 1 to 3, characterized in that the water separated off for treatment is subjected to an ozonization.

5. Method according to one of claims 1 to 4, characterized in that the water separated off for treatment is subjected to a catalytic oxidation.

6. Method according to one of claims 1 to 5, characterized in that the water is treated in closed tanks.

7. Method according to one of claims 1 to 6, characterized in that the complete quantity of circuit water is treated and a complete second quantity of water is used for maintaining the circuit.

## Revendications

1. Procédé de traitement d'eau de circuit en installations pour peinture au pistolet pulvérisateur, dans laquelle une partie de l'eau est traitée, alors qu'une autre partie est utilisée pour le maintien du circuit, caractérisé en ce qu'une partie de l'eau est traitée de façon stationnaire et est échangée, après traitement, avec l'eau non traitée.

2. Procédé selon la revendication 1, caractérisé en ce qu'on utilise en tant qu'eau de circuit une quantité d'eau qui suffit juste à remplir les tuyaux et les chicanes des chambres de pulvérisation.

3. Procédé selon la revendication 1 ou 2, caractérisé en ce que l'eau séparée pour le traitement est soumise à un ajustage de pH.

4. Procédé selon l'une quelconque des revendications 1 à 3, caractérisé en ce que l'eau séparée pour le traitement est soumise à un processus d'ozonisation.

5. Procédé selon l'une quelconque des revendications 1 à 4, caractérisé en ce que l'eau séparée pour le traitement est soumise à une oxydation catalytique.

6. Procédé selon l'une quelconque des revendications 1 à 5, caractérisé en ce que le traitement de l'eau se fait dans des réservoirs fermés.

7. Procédé selon l'une quelconque des revendications 1 à 6, caractérisé en ce que la quantité complète d'eau de circuit est traitée et qu'on utilise, pour le maintien du circuit, une deuxième quantité complète d'eau.
